# EUROPÄISCHE PATENTSCHRIFT

(11) **EP 1 141 800 B1**
(45) Veröffentlichungstag und Bekanntmachung des Hinweises auf die Patenterteilung: **06.07.2005**
(21) Anmeldenummer: 00971343.9
(22) Anmeldetag: 09.10.2000
(51) Int. Cl.: G05B 19/418

(54) **VERFAHREN ZUR ERSTELLUNG VON UNTERLAGEN ODER INFORMATIONEN FÜR EIN TECHNISCHES PRODUKT**
METHOD FOR PRODUCTION OF DOCUMENTS OR BROCHURES FOR A TECHNICAL PRODUCT
PROCEDE POUR CREER DES DOCUMENTS OU DES ELEMENTS D'INFORMATION CONCERNANT UN PRODUIT TECHNIQUE

(30) Priorität: 14.10.1999 DE 19949495
(43) Veröffentlichungstag der Anmeldung: 10.10.2001
(73) Patentinhaber: Volkswagen Aktiengesellschaft, 38436 Wolfsburg (DE)
(72) Erfinder: OBERHOLTHAUS, Rigbert, 38106 Braunschweig (DE)
(74) Vertreter: Banzer, Hans-Jörg, Dipl.-Ing.
(86) Internationale Anmeldenummer: PCT/EP2000/009853
(87) Internationale Veröffentlichungsnummer: WO 2001/027704

(56) Entgegenhaltungen:
- EP-A- 0 520 923
- EP-A- 0 703 111
- EP-A- 0 785 491
- EP-A- 0 790 569
- DE-A- 4 307 367
- DE-A- 19 707 188
- DE-A- 19 804 931
- DE-C- 19 921 063
- US-A- 5 434 791
- US-A- 5 726 898

## Beschreibung

Es ist allgemein bekannt, daß seit geraumer Zeit die Anforderungen an die Fertigung technischer Produkte wachsen. Einerseits werden technische Produkte immer komplizierter, da die Leistungsanforderungen mit dem technischen Fortschntt ständig steigen und somit bei der Fertigung eines technischen Produktes immer härtere Bedingungen zu erfüllen sind. Eine solche Entwicklung bnngt es mit sich, daß die Fertigung auf Qualitätsvorstellungen Rücksicht nehmen muß, die nur bei äußerster Sorgfalt und Präzision überhaupt zu erfüllen sind Andererseits sind. Produktionsvorgänge einem ständig wachsenden Konkurrenzkampf ausgesetzt, so daß die Fertigungsingenieure aus diesem Grunde gezwungen sind, besonders preiswerte Fertigungsmethoden anzuwenden und auf Materialien und Zulieferteile zurückzugreifen, die möglichst kostengünstig sind.

Da moderne technische Produkte, welche im Rahmen der oben geschilderten Bedingungen hergestellt werden, außerordentlich komplex aufgebaut sein können und vielfältige Funktionen erfüllen sollen, ist die Notwendigkeit immer größer geworden, in einer Produktbeschreibung den Aufbau und die Funktion sowie Handhabung und Bedienung fur den Benutzer eines solchen technischen Produktes möglichst verständlich und anschaulich zu beschreiben. Mit anderen Worten, die Erwartungen der Käufer an schriftliche Unterlagen oder an zusätzliche Informationen, die auf verschiedenen Medien gespeichert sein können, sind außerordentlich hoch Kunden, die ein modernes technisches Produkt erwerben, haben im allgemeinen die Erwartung und darüber hinaus auch die Forderung, daß sie aus Informationsunterlagen, die dem Produkt vom Hersteller beigefügt werden, über den Aufbau des Produktes einerseits und über die Wirkungsweise und Handhabung andererseits in möglichst leicht verständlicher Form und gleichwohl erschöpfend informiert werden.

Der oben niedergelegte Sachverhalt zeigt sich sehr deutlich in der Kraftfahrzeugindustrie und soll daher nachfolgend am Beispiel eines Kraftfahrzeugs dargestellt und veranschaulicht werden.

In der vorliegenden Anmeldung werden die oben angesprochenen Produktunterlagen allgemein kurz als Produktbuch und im Zusammenhang mit einem Kraftfahrzeug als Bordbuch bezeichnet. Ein solches Bordbuch sollte möglichst alle wissenswerten technischen Merkmale eines Kraftfahrzeuges enthalten sowie auch die Ausstattungseigentümlichkeiten. Es versteht sich, daß ein derartiges Bordbuch auf vielfältige Details einzugehen hat, welche außer der Bedienung und Handhabung auch Wartung und Reparatur eines Kraftfahrzeuges ansprechen. Dabei ist auch zu berücksichtigen, daß die technische Vorbildung verschiedener Benutzer und Käufer von Kraftfahrzeugen recht unterschiedlich sein kann. Für die Ausgestaltung eines Bordbuches besteht daher die Aufgabe, einerseits den Aufbau und die Funktion eines Kraftfahrzeuges so vollstandig und erschöpfend wie möglich zu beschreiben, während andererseits zugleich Benutzer mit unterschiedlichen Vorkenntnissen auf bestimmte Fragen in einer möglichst übersichtlichen Darstellung verhaltnismäßig rasch die gesuchten Antworten auffinden können.

Aus der oben kurz zusammengefaßten Problematik bei der Erstellung und Ausgestaltung eines Bordbuches dürfte hervorgehen, daß zur Erfüllung sämtlicher Anforderungen, die an ein solches Bordbuch gestellt werden, ein ganz erheblicher logistischer Aufwand erforderlich ist.

Die Schwierigkeiten bei der Erstellung eines Bordbuches sollen nachfolgend zumindest schlaglichtartig beleuchtet werden.
Es versteht sich ohne weitere Erläuterung, daß die Planung, Erstellung, Ausgestaltung und Bereitstellung eines Bordbuches ein Prozeß ist, der eine große Anzahl von Schnittstellen aufweist, die miteinander koordiniert werden müssen. Es sind nämlich eine größere Anzahl von verschiedenen Sachgebieten beteiligt, deren unterschiedliche Gegebenheiten aufeinander abgestimmt werden müssen. Außerdem ist auch der zeitliche Ablauf einer Fertigung von erheblicher Bedeutung, die bei der Erstellung des in Rede stehenden Bordbuches problematisch sein kann.

Bei der derzeitigen Vorgehensweise der Bordbuch-Abwicklung besteht kaum eine Möglichkeit, einen Nachweis daruber zu führen, daß ein Bordbuch in ein Kraftfahrzeug eingelegt wurde, und es ist auch keine Gewähr dafur vorhanden, daß ein unter Umständen in das Kraftfahrzeug eingelegtes Bordbuch tatsächlich alle Merkmale dieses Kraftfahrzeuges berücksichtigt.

Besondere Probleme treten auch dann auf, wenn von Kunden Bordbücher nachgefordert werden.

Es sollte auch nicht übersehen werden, daß ein erhebliches Risiko besteht, wenn der Inhalt eines Bordbuches nicht allen technischen und rechtlichen Anforderungen gerecht werden sollte. Es bestehen dann nämlich Gewährleistungsansprüche des Kunden, die eventuell hohe Kosten verursachen können.

Es hat sich in der Praxis gezeigt, daß für die Erstellung eines Bordbuches die dazu erforderlichen Materialien zu hohen Lagerbeständen führen können, die bei einer nicht optimalen Organisation unnötige Kosten verursachen, die kaum tragbar sind. Die Erfahrung zeigt, daß manchmal umfangreiche Buchbestände nicht zu verwerten sind und daher zu vernichten sind. Es versteht sich, daß die damit verbundenen Kosten als schmerzlich empfunden werden müssen. Es darf jedoch nicht übersehen werden, daß wegen des komplexen Vorganges auch bei bester Organisation die angesprochenen Vorgänge nicht alle optimal kontrollierbar sind.

Es ist auch bisher nicht gelungen, die Arbeiten im Zusammenhang mit der Erstellung von Bordbüchern in wünschenswertem Umfang zu automatisieren. Die damit verbundenen Arbeiten sind weiterhin sehr mitarbeiterintensiv.

Weiterhin hat sich in der Praxis gezeigt, daß Änderungen in Bordbüchern oft unumgänglich sind und solche Änderungen als außerordentlich kostenintensiv zu betrachten sind.

Die oben bereits geschilderten Vorgänge im Zusammenhang mit der Bordbuch-Abwicklung lassen bereits erkennen, daß ein höherer Steuerungs- und Abstimmungsaufwand besteht.

Es ist in der Fachwelt auch bekannt, daß die Bordbuch-Abwicklung ein störanfälliger Prozeß im Hinblick auf Sauberkeit und Termintreue ist.

Es kommt erschwerend zu den bisher geschilderten Problemen hinzu, daß die Bordbuch-Abwicklung einen stark schwankenden Arbeitsaufwand erfordert, der auch häufig mit Sonderaktionen verknüpft ist.

Wegen der oben angesprochenen Anforderungen an Umfang, Inhalt und Qualität eines Bordbuches muß eine erhebliche Anzahl von Varianten bereitgestellt werden, welche sowohl auf unterschiedliche Ausstattungseigentümlichkeiten als auch auf verschiedene Sprachwünsche eingeht

Zur Erläuterung und Veranschaulichung sei darauf hingewiesen, daß der Umfang eines durchschnittlichen Bordbuches für ein Kraftfahrzeug in der Großenordnung von 300 Druckseiten liegen kann.

Befinden sich Produkte, in diesem obigen Fall also Kraftfahrzeuge in der Produktion, so bedarf es eines erheblichen logistischen Aufwandes, entsprechende, dem jeweiligen Fertigungsschritt zuzuordnende Anbauteile just-in-time zukommen zu lassen So entstehen zwei Anwendungsfelder. Zum einen ist das jeweilige Anbauteil entweder senenmäßig vorgesehen, und muss lediglich zum richtigen Zeitpunkt an den Motageort disponiert werden, zum anderen entsteht mit Montage des Anbauteiles ein Ausstattungsmerkmal, was dann am Ende produktindividuell ist.

Somit sind an die Dokumentation dieser Handlungen hohe Anforderungen zu stellen.

In der DE 198 04 931 A1 ist eine Möglichkeit der Informationslogistik uffenbart, bei der Daten über ein Produkt in bestimmter Form gespeichert werden und damit auf einfache Weise anhand verschiedener Kriterien abgerufen und zusammengestellt werden können.

In der EP 0 790 569 A2 ist eine Chipkarte offenbart, auf der ein Bordbuch gespeichert sein kann.

Auf dem oben geschilderten Stand der Technik aufbauend liegt der Erfindung die **Aufgabe** zugrunde, ein Verfahren zur Erstellung von Unterlagen oder Informationen für ein in der Serie und am Fließband herstellbares Produkt zu schaffen, durch welches unter Vermeidung von Lagerhaltung mit besonders geringen Kosten ein sehr leicht verständliches und aussagekräftiges Produktbuch herzustellen ist; Außerdem soll ein solches Produktbuch auf die ggfs individuellen Sonderausstattungen eines Produktes appliziert sein

Zur Losung dieser Aufgabe sieht die Erfindung vor, daß während des Produktionsvorganges unmittelbar am Fließband ein Produktbuch erzeugt wird, daß die wesentlichen technischen Merkmale des Produktes in das Produktbuch aufgenommen werden, daß die für die Benutzung und/oder Bedienung des Produktes relevanten Hinweise in dem Produktbuch vermerkt werden, und daß die für das jeweilige Produktexemplar charakteristischen, individuellen Ausstattungseigentümlichkeiten in das diesem Produktexemplar speziell zugeordnete und auf dieses Produktexemplar zugeschnittene Produktbuch aufgenommen werden

Nach dem Grundgedanken der Erfindung wird die Aufgabe durch eine neue Form der Logistik und des Informations-Managements gelost. Es werden keine kompletten Unterlagen mehr vorab zusammengestellt, die in ihrer herkömmlichen Form für eine Mehrzahl von unterschiedlichen Produkttypen gleichzeitig gültig sein sollten. Es wird vielmehr eine Vielzahl von Informationseinheiten, insbesondere auch in nicht gedruckter Form, bereitgestellt. Die Gesamtheit der Informationseinheiten deckt sämtliche Informationen ab, die für einzelne Produktteile oder Typen von Gesamtprodukten sowie fur deren Betnebsart und sonstige Eigenschaften relevant und spezifisch sind. Die Erstellung und Zusammenstellung der kunden- und produktspezifischen Gesamtinformation in Form eines individuellen Bordbuches für ein bestimmtes Kraftfahrzeug erfolgt nach dem Grundgedanken der Erfindung dadurch, daß bei einer Bestellung sämtliche Produktdaten (Typ, Ausstattung, technische Merkmale, Optionen usw.) sowie Kundendaten angegeben und aufgrund dieser Angaben die maßgeblichen Informationseinheiten aus der Gesamtheit aller Informationseinheiten ausgewählt und bereitgestellt werden.

Gemäß der Erfindung ergibt sich eine Reihe von Vorteilen hinsichtlich des personellen, kostenmäßigen und zeitlichen Aufwandes, und es wird aufgrund der Individualität der ausgewählten Informationen eine hohe Kundenakzeptanz erreicht.
Besonders vorteilhaft ist es, dass Produkt- oder Bordbuch als EDV-Datensatz zu erstellen. Dieser kann so angelegt sein, dass er durch adaptive Ergänzung während des Produktionsprozesses progressiv erweitert wird, bis das Produkt fertiggestellt ist.

Gemäß der Erfindung wird auch der Vorteil erreicht, daß mehr Gestaltungsmöglichkeiten bei der Ausgestaltung eines Bordbuches bestehen Weiterhin ist auch eine besonders individuelle Gestaltung des Bordbuches möglich, welches dann genau allen speziellen Merkmalen, Eigenschaften und Eigentümlichkeiten des zugehörigen Kraftfahrzeuges Rechnung trägt Da gemäß der Erfindung in dem Bordbuch keine Ausfuhrüngen über solche Fahrzeugtypen enthalten sein müssen, welche unter Umständen andere und/oder zusätzliche Merkmale und Eigenschaften aufweisen, kann der Umfang des Bordbuches insgesamt reduziert werden.

Es ist bei der erfindungsgemäßen Verfahrensweise auch ohne besondere Probleme möglich, Änderungen in das Bordbuch aufzunehmen, welche sich aus verschiedenen Gründen kurzfristig ergeben können.

Weiterhin eroffnet die Erfindung auch die Möglichkeit, allen Sprachwünschen eines Kunden gerecht zu werden, sei es, daß eine eventuell ausgefallene Sprache gewünscht wird, oder sei es, daß das Bordbuch multilingual sein soll.

Ein in der heutigen Fertigung besonders relevanter Vorteil besteht dann, daß verschiedene Vorgänge überflüssig werden, die bisher einen erheblichen Aufwand an Personal und Kosten hervorgerufen haben. Gemäß der Erfindung ist nämlich keine Lagerhaltung mehr erforderlich, es gibt keine Behälterstrome mehr, es ist kein Waschen der Behälter mehr notwendig, es entfällt jeglicher Transport, und es gehört schließlich Bordbuch-Abfall der Vergangenheit an.

Außerdem wird eine erhöhte Kündennahe erreicht, weil der Kunde in seinem Bordbuch genau diejenige Information findet, die für das von ihm erworbene Kraftfahrzeug zutrifft.

Es wird gemäß der Erfindung überflussig, Optionen und Vananten bei der technischen Ausgestaltung eines Kraftfahrzeuges in einem bestimmten Bordbuch zu verwenden, weil das gemäß der Erfindung ausgestaltete Bordbuch haargenau nur diejenigen speziellen Merkmale und Eigentümlichkeiten enthalt, welche für das vom Kunden spezifizierte und erworbene Kraftfahrzeug zutreffen.

Gemäß einer vorteilhaften Ausgestaltung der Erfindung ist vorgesehen, daß das Bordbuch fur ein Kraftfahrzeug erstellt wird Damit lassen sich alle Vorteile praktisch realisieren, die oben im Zusammenhang mit einem allgemeinen Produktbuch veranschaulicht wurden.

Eine besonders vorteilhafte Ausgestaltung des erfindungsgemäßen Verfahrens sieht vor, daß erst im Laufe der Fertigung erkennbar gewordene Informationen in das Produktbuch aufgenommen werden. Dadurch wird das Bordbuch absolut aktuell und nimmt auch auf technische Feinheiten Rücksicht, die erst im Laufe des Fertigungsvorganges Gestalt gewinnen und unter Umständen für die Handhabung und/oder Wartung des Kraftfahrzeuges von Bedeutung sein können. Es zeigen nämlich auch bei Senenprodukten unter Umständen einzelne Exemplare gewisse individuelle Eigenschaften, die durch das Zusammenwirken von Kundenspezifikationen einerseits und Fertigungstoleranzen andererseits in Erscheinung treten können.

In dieser Hinsicht kann es auch zweckmäßig und vorteilhaft sein, daß in das Produktbuch solche technische Daten aufgenommen werden, welche durch Messung an dem ganz oder teilweise fertiggestellten Produkt unter Berücksichtigung von Fertigungstoleranzen ermittelt werden. Beispielsweise könnte unter Umständen an der einen oder anderen Stelle die Dicke der Lackschicht Werte annehmen, deren Kenntnis und Dokumentation später einmal von Interesse sein würde.

Eine besonders vorteilhafte weitere Ausgestaltung des erfindungsgemäßen Verfahrens sieht vor, daß Leistungsdaten in das Produktbuch aufgenommen werden, die während oder nach der Fertigung des Produktes auf einem Prüfstand experimentell ermittelt werden. Es ist nämlich vorstellbar, daß die Leistung der Maschine eines Kraftfahrzeuges, die nach der Fertigung auf einem Prüfstand zu messen ist, zu einer wünschenswerten und für den Kunden ebenso wie für eine Werkstatt wissenswerte und gegebenenfalls interessante Abrundung der technischen Information über das Kraftfahrzeug führt.

Aus Haftungsgründen ebenso wie in anderem Zusammenhang kann es sich als vorteilhaft erweisen, daß Kundenspezifikationen im Produktbuch niedergelegt werden. Damit können nämlich besondere Verhaltensweisen eines komplexen technischen Produktes wie eines Kraftfahrzeuges unter Umständen plausibel werden, wenn nämlich berücksichtigt werden kann, daß sie gegebenenfalls auf außergewöhnliche Kundenspezifikationen zurückzuführen sind.

In vielen Fällen wird es sich als vorteilhaft erweisen, daß das Produktbuch in einer von Menschen lesbaren Form ausgedruckt wird.

Es wird in Zukunft sicherlich häufig anzustreben sein, daß der Inhalt des Produktbuches in einer individuell gebrannten CD-ROM niedergelegt wird.

Gemäß einer Weiterbildung des erfindungsgemäßen Verfahrens kann vorgesehen sein, daß der Inhalt des Produktbuches auf einem zum Produkt gehörigen Datenspeicher wie Kassette, Festspeicher, Chipkarte oder dergleichen abgespeichert wird. Dadurch steht der Inhalt des Bordbuches jederzeit im Fahrzeug abrufbar zur Verfugung.

Da Kraftfahrzeuge heute sehr häufig mit einem Navigationssystem ausgestattet sind, sieht eine weitere Ausgestaltung des erfindungsgemäßen Verfahrens vor, daß der Inhalt des Produktbuches, welches als Bordbuch für ein Kraftfahrzeug ausgebildet wird, auf einem Datenspeicher abgespeichert wird, der über ein Navigationssystem auszulesen ist. Auf diese Weise wird sichergestellt, daß die Information aus dem Bordbuch sehr rasch und einfach abgerufen und außerdem auch anschaulich dargestellt werden kann.

Schließlich sieht eine weitere vorteilhafte Ausgestaltung des erfindungsgemaßen Verfahrens vor, daß das Produktbuch in einer vorgebbaren Sprache verfaßt wird. Der Kunde kann also wünschen, daß das Bordbuch in einer von ihm vorgegebenen Sprache abgefaßt wird, und zwar auch dann, wenn es sich nicht um eine allgemein gängige Weltsprache handeln sollte.

Insgesamt kann gemäß der Erfindung somit ein Bordbuch dem Kunden zur Verfügung gestellt werden, welches uneingeschränkt und in jeder Hinsicht auf diejenigen technischen Merkmale und Ausstattungseigentümlichkeiten zugeschnitten ist, welche tatsächlich beim zugehörigen Kraftfahrzeug realisiert sind. Damit ergeben sich nicht nur die oben aufgezeigten Vorteile bei der praktischen Auswertung und/oder Lektüre des Bordbuches, es wird dem Kunden darüber hinaus auch ein Höchstmaß an Sicherheit gewährleistet, daß die aus dem Bordbuch entnehmbaren Informationen in der Tat auf das zugehörige Kraftfahrzeug zutreffen. Damit wird die Gefahr einer Fehlinterpretation ausgeschlossen.

Es kommt durch den individuellen Zuschnitt des erfindungsgemäßen Bordbuches noch der psychologische Vorteil hinzu, daß der Kunde nicht etwa auf denkbare und bei anderen Exemplaren verwirklichte Komfort- oder Luxuseinrichtungen hingewiesen wird, die bei dem von ihm erworbenen Exemplar nicht realisiert sind. Dadurch wird vermieden, daß es als Mangel empfunden werden konnte, einen gewissen Komfort nicht geboten zu bekommen, obwohl er grundsätzlich möglich wäre Es werden also beispielsweise bei einem Kunden, dessen Fahrzeug nicht mit einer Servolenkung ausgestattet ist, keine phantasievollen Wunschträume geweckt, wie praktisch und nützlich eine Servolenkung sein könnte

In weiterer vorteilhafter Ausgestaltung ist angegeben, daß aufgrund der im Produktionsprozess gesammelten Produkt- oder Fahrzeugdaten ein produkt - oder fahrzeugspezifisches Funktions- oder Bedienhandbuch entsteht Dieses kann dann an einer entsprechenden Schnittstelle zum Druck oder zur Anzeige auf ein entsprechendes Medium übertragen werden. Dieses Medium ist dabei entweder ein Drucker, um hernach ein Papierexemplar eines Bord- oder Produktbuches erstellen zu können, oder es ist ein Display mit einer multimedialen Darstellung des Produkt- oder Bordbuchinhaltes Bei der Übertragung auf ein Medium kann dabei auch ein nach Suchbegnffen orientiertes partielles Darstellen bspw eines speziellen Teiles des Bordbuches abrufbar sein.

In weiterer vorteilhafter Ausgestaltung ist vorgesehen, daß das Produkt- oder Bordbuch in einen logistischen Teil und einen produktbeschreibenden Teil unterteilt ist. Im logistischen Teil wird der fertigungschronologische Einbau der Teile festgehalten. Dann sind bspw Dispositiondaten, sowie auch eineindeutige Teilekennzeichnungen enthalten, die jedes eingebaute Teil in Herkunft und Beschaffenheit dokumentiert, um bei späterer Reparatur oder Wartung auch im Nachhinein die Ursache fur einen Funktionsausfall ggfs rekonstruieren zu können, und somit die Fertigungsbedingungen durch dieses Informations-feed-back verbessern zu können. Hierzu können Schnittstellen bei einer nach dem erfindungsgemaßen Verfahren arbeitenden Einrichtung eingerichtet sein, über welche solche produkt- oder fahrzeugbezogenen Daten zur Diagnose auslesbar sind.

Aus diesem Grund besteht eine weitere vorteilhafte Ausgestaltung hierzu dann, daß der Zugnff auf die Daten des logistischen Teiles des Produkt- oder Bordbuches mit einer anderen Zugriffsberechtigung abrufbar ist, als die Daten des produktbeschreibenden Teiles des Produkt- oder Bordbuches. Hierdurch wird begünstigt, daß die fertigungsbezogenen Teiledaten lediglich von einer autorisierten Werkstatt abgerufen werden können. Demgegenüber kann der produktbeschreibende Teil jederzeit und in jeder Form vom Produkt- oder Fahrzeugbenutzer abgerufen werden Ebenso. können die im produktbeschreibenden Teil des Bordbuches vom Benutzer eingegebene Einstellungsdaten frei abgerufen, und sogar exportiert oder importiert werden.

Die oben genannten Produkt- oder Fahrzeugbezogenen Daten aus dem logistischen Teil bleiben sinnvollerweise dem Produkt oder dem Fahrzeug dauerhaft anhängend, damit diese Daten auch bei Besitzerwechsel beim Produkt oder Fahrzeug bleiben.

Weiterhin vorteilhaft ist es, die fahrzeug- oder produktinterne Fehler- oder Schadensmeldungslogik mit dem elektronischen Bord- oder Produktbuch logisch zu verbinden. Damit können in einer entsprechenden Auswertung bereits logische Korrelationen über Herkunft, Zulieferer, Einbautag etc mit den Teiledaten des defekten Teiles vorgenommen werden. Diese Korrelationen können entweder fahrzeugintern erfolgen, und dem Benutzer wertvolle Meldungen generieren, oder aber die Korrelation wird fahrzeugextern mit Hilfe eines anschließbaren Diagnosegerätes vorgenommen.

In einer besonders vorteilhaften Ausgestaltung werden aus dem elektronischen Bordbuch Bedienungsanleitungsbilder oder -bildsequenzen generiert. Diese können bei entsprechendem Abruf dem Benutzer eine genaue visualisierte Ausführung einer Funktion vermitteln.

Im Hinblick auf eine Einrichtung besteht der Kern der Erfindung dann, daß auf dem als Produkt- oder Bordbuch zu bezeichnenden Datenspeicher Produkt- oder Bordinformationen abgespeichert sind, die auf einer Anzeigeeinheit, oder in einem Kraftfahrzeug durch eine Ausgabe- oder Anzeigeeinheit abrufbar sind.

Hierzu sind die entsprechenden Daten natürlich in vorteilhafter Weise auf einem Bildschirm darstellbar Einstellungsdaten, wie Sitzeinstellung, Klimaeinstellung, Radiosendereinstellungen, Spiegeleinstellungen, Telefonnummern, Navigationsdaten, etc sind dabei ebenfalls in diesem Speicher ablegbar. So ist der produktbeschreibende Teil des Bordbuches individuell auch nachträglich erweiterbar.

Weiterhin ist die Datenspeichereinrichtung derart ausgestaltet, daß in einem bestimmten Betnebsmodus der Datenspeichereinrichtung das Bordbuch als menuegeführtes Betriebshandbuch auf einem Display darstellbar ist.

Zur Realisierung aller oben beschriebenen auch verfahrensgemäßen Funktionen, ist die Datenspeicheranordnung mit mindestens einer Schnittstelle zum exportieren und importieren von Daten vorgesehen.

Die Erfindung wird nachfolgend beispielsweise anhand der Zeichnung beschrieben.

Es zeigt:
Fig.1. schematisches Blockdiagramm, welches den Ablauf des erfindungsgemäßen Verfahrens veranschaulicht.
Fig. 2. Benutzung eines logischen Bordbuches.

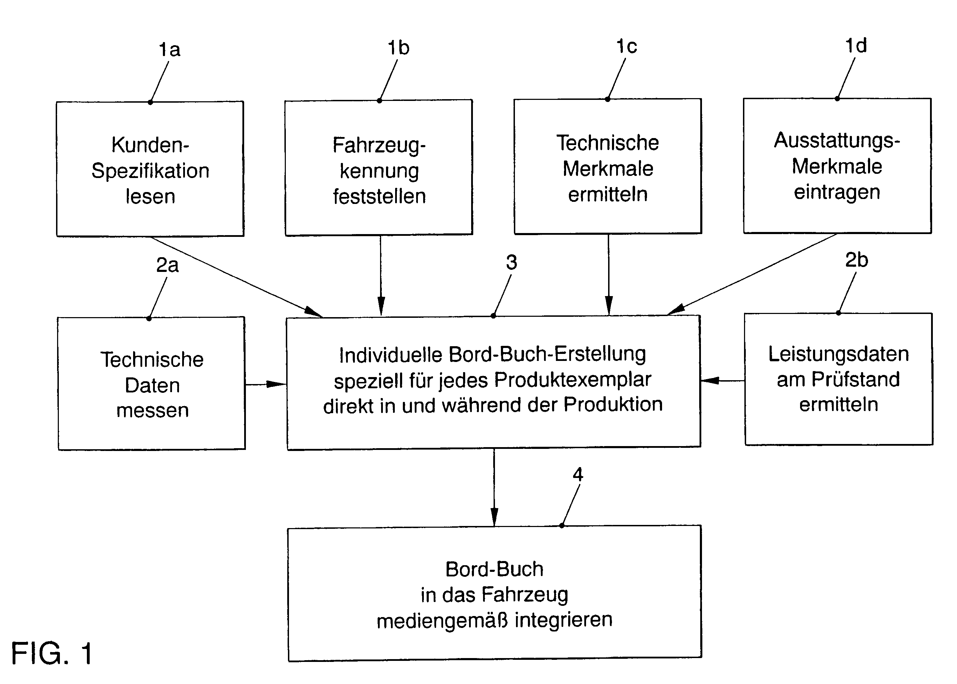

Aus Figur 1 ist zu entnehmen, daß grundsätzlich die Erstellung des Bordbuches nach dem erfindungsgemäßen Verfahren in drei Schritten abläuft.

Im ersten Schritt werden Informationen und Daten gesammelt, welche in das Bordbuch einfließen sollen. Im Schritt 1a werden Kundenspezifikationen gelesen und ausgewertet. Im Schritt 1b wird die Fahrzeugkennung festgestellt, welche im Bordbuch ihren Niederschlag finden soll. Im Schritt 1c werden alle diejenigen technischen Merkmale ermittelt, welche bei der Fertigung des in Rede stehenden Kraftfahrzeugs berücksichtigt werden und somit in das Bordbuch aufzunehmen sind. Im Schritt 1d werden alle Ausstattungsmerkmale eingetragen, die sich aufgrund der Kundenwünsche ergeben.

Es ist darauf hinzuweisen, daß die in den Schritten 1a, 1b, 1c und 1d niedergelegten Maßnahmen nur als Beispiele zu werden sind, ohne Anspruch auf Vollständigkeit. Es kommt hier nämlich nur darauf an, grundsätzlich diejenigen Maßnahmen anzusprechen und zu veranschaulichen, welche bei der Fertigung eines Kraftfahrzeuges eine solche Bedeutung erlangen, daß sie im Bordbuch niedergelegt sein sollten.

Es ist auch zu berücksichtigen, daß die Beschreibung eines Bordbuches für ein Kraftfahrzeug nur als Beispiel fur die allgemeine Erstellung eines Produktbuches für ein technisches Produkt dienen soll, welches beliebiger Natur sein kann.

Im Schritt 2 werden gemäß der Darstellung in der Figur 1 solche Informationen und Daten gesammelt, die sich unter Umständen erst während des Fertigungsvorganges ergeben. Es werden im Schritt 2a technische Daten gemessen, die bei der Fertigung in Erscheinung treten und die unter Umständen für den Betneb, die Handhabung, die Wartung und/oder die Reparatur von Belang sein können. Beispielsweise können sich während der Fertigung aufgrund besonderer Wünsche des Kunden hinsichtlich der Lackierung Meßwerte für die Dicke der Lackschicht ergeben, die im Bordbuch angegeben sein sollten. Sollte namlich der Lack aufgrund bestimmter technischer Bedingungen an einer bestimmten Stelle eine ungewöhnliche Dicke aufweisen, so könnte daraus später unter Umständen der Fehlschluß gezogen werden, es sei diese Stelle einmal nachlackiert worden. Ein solcher Fehlschluß kann gemäß der Erfindung dadurch vermieden werden, daß im Bordbuch bereits zu erkennen ist, daß aus bestimmten Gründen bereits bei der Fertigung die als ungewöhnlich empfundene Dicke der Lackschicht aufgetreten ist.

Im Schritt 2b konnen beispielsweise die Leistungsdaten der Maschine auf einem Prüfstand ermittelt werden, wobei unter Umständen die Kompression oder andere Parameter protokolliert werden. Derartige Daten können unter bestimmten Voraussetzungen für die Beurteilung der Maschine in einer Werkstatt später einmal von Bedeutung sein.

Gemäß der schematischen Darstellung in der Figur 1 werden im Schritt 3 des erfindungsgemäßen Verfahrens direkt in und während der Produktion speziell für jedes Produktexemplar, d.h. für jedes Kraftfahrzeugexemplar, die in den Schritten 1 und 2 gesammelten Daten und Informationen sinnvoll zusammengestellt, miteinander verknüpft und in einem individuellen Bordbuch zusammengefaßt niedergelegt,

Schließlich wird gemäß der schematischen Darstellung im Blockdiagramm der Figur 1 im Schritt 4 das Bordbuch in das Kraftfahrzeug mediengerecht integriert. Dies bedeutet, daß je nach Ausgestaltung des Bordbuches entweder beispielsweise ein von Menschen lesbares Exemplar des Bordbuches in einer vom Kunden gewünschten Sprache in das Kraftfahrzeug hineingelegt wird. Es kann jedoch auch so vorgegangen werden, daß gemäß den entsprechenden Wünschen eines Kunden eine CD-ROM in einer vom Kunden festgelegten Weise in das Kraftfahrzeug integriert wird.

Alternativ könnte auch vorgesehen sein, daß gemaß entsprechender Kundenanforderung der gesamte Inhalt des Bordbuches in einem dafür vorgesehenen EDV-Speicher im Kraftfahrzeug niedergelegt wird, so daß der Inhalt des Bordbuches beispielsweise auf einem Bildschirm darstellbar ist.

Wie die Figur 1 veranschaulicht, kann die erfindungsgemäße Erstellung eines Bordbuches für ein Kraftfahrzeug oder allgemein die Herstellung eines Produktbuches für ein beliebiges technisches Produkt in wenigen übersichtlichen und kompakten Schritten ablaufen, wobei zugleich vielfältige und unterschiedliche Wünsche des Kunden einerseits sowie technische Gegebenheiten des Fertigungsprozesses andererseits berücksichtigt werden und zugleich das erstellte Bordbuch einen absolut individuellen Zuschnitt aufweist.

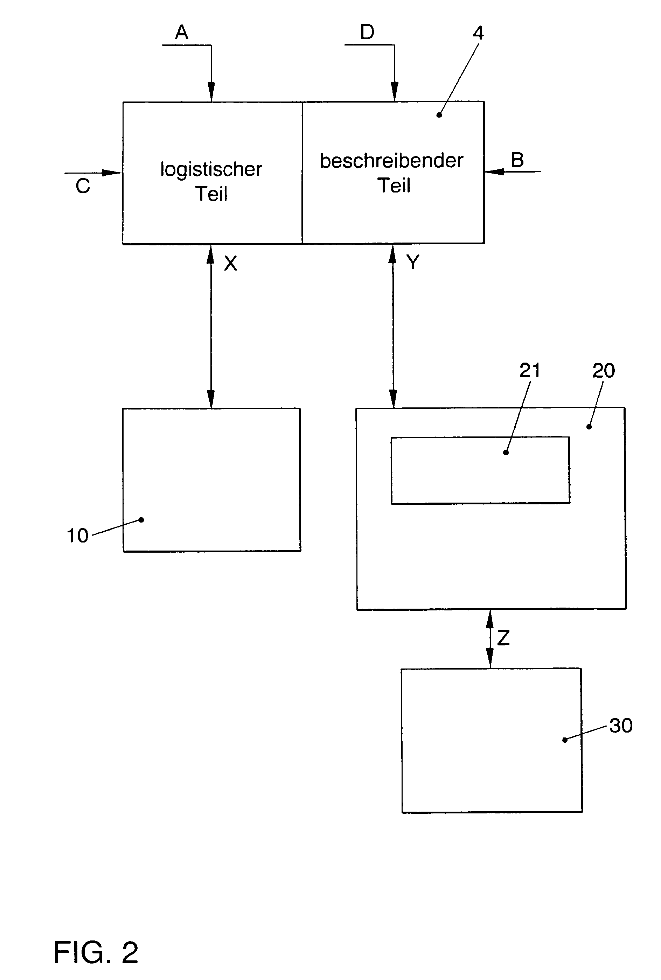

Figur 2 zeigt die Wirkungs- und Benutzungsweise des logischen Bordbuches. Zentralpunkt ist das hier lediglich durch einen Kasten dargestellte Bordbuch, was gegenständlich den kompletten Datensatz sowie die elektronischen Schnittstellen aufweist. Ein erster Input erfolgt, wie ausführlich beschneben während des Fertigungsprozesses. Über den Dateninput A werden Fertigungslogistische Daten, die das betreffende Fahrzeug in der Fertigung und auch später begleiten eingelesen. Ebenso werden über den Input D Ausstattungsdaten über Vorhandensein und Merkmale eines Anbauteiles eingelesen, die dann im beschreibenden Teil des Bordbuches abgespeichert werden.

Da das Bordbuch in einem vorteilhaften Ausführungsbeispiel logisch unterteilt ist in einen logistischen Teil und einen funktionsbeschreibenden Teil, erfolgt der logistische Dateninput über A und beinhaltet somit Ausstattungsdaten, sowie auch logistische Daten, bspw über Herkunft, Zulieferer, Beschaffenheit etc eines eingebauten Teiles Im beschreibenden Teil des Bordbuches entsteht eine Art Betnebshandbuch.

Ein weiterer Input kann der Fahrzeugbesitzer über B eingeben. Hier kann er bspw Einstellungsdaten, wie Sitz- und Klimaeinstellung, Radiosender, Navigationsdaten etc eingeben, die sodann im funktionsbeschreibenden Teil des Bordbuches abgespeichert werden.

Ein weiterer Input kann über C erfolgen. Dieser Input besteht aus Fehlermeldungen aus dem Betneb des Fahrzeuges. Diese können ebenfalls im logistischen Teil des Bordbuches abgespeichert sein, und beispielsweise von einem Diagnosegerät 10 ausgelesen werden. Hierzu ist eine Schnittstelle x vorgesehen, und eine Fehlerdiagnose per externem Computer erstellt. Diese Daten, sowie die logistischen, diesem speziellen Fahrzeug zugeodneten Daten über ein Listing und die Eigenschaften und Herkunft der einzelnen Teile, befinden sich im logistischen Teil des Bordbuches.

Dies wiederum bedeutet, dass diese Daten immer im Fahrzeug verbleiben werden, bzw diesem jeweiligen Fahrzeug zugeordnet bleiben. Anders werden hingegen die Daten im beschreibenden Teil des Bordbuches gehandhabt.

Über die Schnittstelle y können Einstellungs-, Ausstattungs-, und Bedienungsdaten aus dem beschreibenden Teil des Bordbuches herausgelesen werden, und zwar in ein multimediales Anzeigegerät 20. Dieses enthält ein Display 21 auf dem die Daten entweder als Wortdatei oder als Bild- oder Bildsequenzdatei generiert werden. Hierüber läßt sich nun ein multimediales Bedienhand direkt im Fahrzeug erzeugen, was im Hinblick auf die jeweilige Fahrzeugausstattung alle daraus resultierenden Funktionen abruf- und erläuterbar macht.

Das Anzeigegerät 20 weist ebenfalls noch eine Schnittstelle z auf, über welche benutzerspezifische Einstellungsdaten ausgelesen, also in andere Fahrzeuge importiert oder aus anderen Fahrzeugen exportiert werden können. Diese Daten sind , weil sie personen- und nicht fahrzeugspezifisch sind exportierbar oder importierbar. Diese Daten sind somit zu trennen von den reinen Fahrzeugbezogenen Daten, die dem Fahrzeug zugeordnet bleiben, auch wenn der Besitzer wechselt.

Die übngen Daten verbleiben also im Fahrzeug und geben inhaltlich die Ausstattung sowie die Herkunft aller Anbauteile zeitlich für die gesamte Lebensdauer eines Fahrzeuges wieder

## Patentansprüche

1. Verfahren zur Erstellung von Unterlagen oder Informationen für ein in der Serie und am Fließband herstellbares Produkt, wobei die wesentlichen technischen Merkmale des Produktes in ein Produktbuch aufgenommen werden, und wobei die für die Benutzung und/oder Bedienung des Produktes relevanten Hinweise in dem Produktbuch vermerkt werden, **dadurch gekennzeichnet, daß** das Produktbuch wahrend des Produktionsvorganges unmittelbar am Fließband erzeugt wird, daß dabei die für das jeweilige Produktexemplar charakteristischen, individuellen Ausstattungseigentümlichkeiten in das diesem Produktexemplar speziell zugeordnete und auf dieses Produktexemplar zugeschnittene Produktbuch aufgenommen werden und daß ein Betriebsmodus "Producktbuch" als menuegeführtes Betriebshandbuch auf einem Display darstellbar ist.

2. Verfahren nach Anspruch 1,
**dadurch gekennzeichnet,**
**daß** das Produktbuch als EDV-Datensatz ersteilt, und im Laufe des Produktionsprozesses adaptiv ergänzt/erweitert wird.

3. Verfahren nach Anspruch 1, **dadurch gekennzeichnet, daß** das Produktbuch als Bordbuch für ein Kraftfahrzeug erstellt wird.

4. Verfahren nach Anspruch 1 oder 2, **dadurch gekennzeichnet, daß** erst im Laufe der Fertigung erkennbar gewordene Informationen in das Produktbuch aufgenommen werden.

5. Verfahren nach einem der, vorhergehenden Ansprüche, **dadurch gekennzeichnet, daß** in das Produktbuch solche technische Daten aufgenommen werden, welche durch Messung an dem ganz oder teilweise fertiggestellten Produkt unter Berücksichtigung von Fertigungstoleranzen ermittelt werden.

6. Verfahren nach einem der vorhergehenden Ansprüche, **dadurch gekennzeichnet, daß** Leistungsdaten in das Produktbuch aufgenommen werden, die während oder nach der Fertigung des Produktes auf einem Prüfstand experimentell ermittelt werden.

7. Verfahren nach einem der vorhergehenden Ansprüche, **dadurch gekennzeichnet, daß** Kundenspezifikationen im Produktbuch niedergelegt werden.

8. Verfahren nach einem der vorhergehenden Ansprüche, **dadurch gekennzeichnet, daß** das Produktbuch in einer von Menschen lesbaren Form ausgedruckt wird.

9. Verfahren nach einem der vorhergehenden Ansprüche, **dadurch gekennzeichnet, daß** der Inhalt des Produktbuches in einer individuell gebrannten CD-ROM niedergelegt wird.

10. Verfahren nach einem der vorhergehenden Ansprüche, **dadurch gekennzeichnet, daß** der Inhalt des Produktbuches auf einem zum Produkt gehörigen Datenspeicher wie Kassette, Festspeicher, Chipkarte oder dergleichen abgespeichert wird.

11. Verfahren nach einem der vorhergehenden Ansprüche, **dadurch gekennzeichnet, daß** der Inhalt des Produktbuches, welches als Bordbuch für ein Kraftfahrzeug ausgebildet wird, auf einem Datenspeicher abgespeichert wird, der über ein Navigationssystem auszulesen ist.

12. Verfahren nach einem der vorhergehenden Ansprüche, **dadurch gekennzeichnet, daß** das Produktbuch in einer vorgebbaren Sprache verfaßt wird.

13. Verfahren nach einem der vorhergehenden Ansprüche,
**dadurch gekennzeichnet,**
**daß** aufgrund der so gesammelten Produkt- oder Fahrzeugdaten ein produkt- oder fahrzeugspezifisches Funktions- und/oder Bediener-Produktbuch zum Druck- oder zur Anzeige auf ein entsprechendes Medium übertragbar ist.

14. Verfahren nach Ansprüch 13,
**dadurch gekennzeichnet,**
**daß** das Medium ein Drucker und/oder ein Display, auf dem der gesamte oder nur ein partieller Produktbuchinhalt wiedergebbar ist.

15. Verfahren nach einem der vorhergehenden Ansprüche,
**dadurch gekennzeichnet,**
**daß** das Produktbuch logisch in einen logistischen Teil und einen produktbeschreibenden Teil unterteilt ist.

16. Verfahren nach Anspruch 15,
**dadurch gekennzeichnet,**
**daß** der Zugriff auf den logistischen Teil mit einer anderen elektronischen Zugriffsart oder Zugriffsberechtigung abrufbar ist, als der produktbeschreibende Teil.

17. Verfahren nach Anspruch 15,
**dadurch gekennzeichnet,**
**daß** der produktbeschreibende Teil des Produkt- oder Bordbuches um benutzerindividuelle, produkt- oder fahrzeugspezifische Benutzungs- oder Einstellungsdaten ergänzt/erweitert werden kann.

18. Verfahren nach einem der vorhergehenden Ansprüche,
**dadurch gekennzeichnet,**
**daß** die Benutzungs- und/oder Einstellungsdaten und/oder produktbeschreibende Daten aus dem Produkt oder Fahrzeug auf Datenträger exportierbar sind, während die logistischen Daten, die den Fertigungsprozess betreffen und die Teile-Identifikation betreffen, im oder am Produkt/Fahrzeug verbleiben.

19. Verfahren nach einem der vorhergehenden Ansprüche,
**dadurch gekennzeichnet,**
**daß** logistische Daten, sowie ggfs Fehler- oder Schadensmeldungsdaten vom Produkt oder vom Fahrzeug, eine elektronisch logische Korrelation über Teile-Identifikation, Herkunft, Zulieferer, Einbautag, etc des defekten Teiles ermöglicht wird.

20. Verfahren nach Anspruch 19,
**dadurch gekennzeichnet,**
**daß** diese Korrelation Fahrzeugintem durchgeführt wird.

21. Verfahren nach Anspruch 19,
**dadurch gekennzeichnet,**
**daß** diese Korrelation fahrzeugextem durchgeführt wird.

22. Verfahren nach einem der vorhergehenden Ansprüche,
**dadurch gekennzeichnet,**
**daß** daß aus dem elektronischen Bordbuch Bedienungsanleitungsbilder oder - filmsequenzen generiert werden können.

23. Datenspeichereinrichtung für ein Produkt oder Bordbuch,
bei dem
auf einem als Produkt- oder Bordbuch zu bezeichnenden Datenspeicher (4) Produkt- oder Bordinformationen abgespeichert sind, die auf einer Anzeigeeinheit, oder in einem Kraftfahrzeug durch eine Ausgabe- oder Anzeigeeinheit (20) abrufbar sind,
**dadurch gekennzeichnet,**
**daß** ein Betriebsmodus "Bordbuch" als menuegeführtes Betriebshandbuch auf einem Display darstellbar ist und Mittel zur Erstellung des Bordbuches nach einem der vorhergehenden Ansprüche vorgesehen sind.

24. Datenspeichereinrichtung nach Anspruch 23,
**dadurch gekennzeichnet,**
**daß** die Daten auf einem Bildschirm (21) darstellbar sind.

25. Datenspeichereinrichtung nach einem der Ansprüche 23 oder 24,
**dadurch gekennzeichnet,**
**daß** Einstellungsdaten, wie Sitzeinstellungen, Klimaeinstellungen, Radiosendereinstellungen, Spiegeleinstellungen, Telefonnummern, Navigationsdaten ebenfalls in diesem Datenspeicher (4) ablegbar sind.

26. Datenspeichereinrichtung nach einem der Ansprüche 23 bis 25,
**dadurch gekennzeichnet,**
**daß** mindestens eine Schnittstelle zum exportieren und/oder importieren von Daten vorgesehen ist.

## Claims

1. Method for producing documents or information for a product which can be mass-produced on a production line, wherein the essential technical features of the product are recorded in a product manual and wherein the instructions which are relevant for use and/or operation of the product are noted in the product manual, **characterized in that** during the production process the product manual is produced directly at the production line, **in that** the specific equipment properties, which are characteristic of the respective example of the product are recorded in the product manual which is specifically assigned to this example of the product and tailored to this example of the product, and **in that** a "product manual" operating mode can be represented as a menu-prompted operating manual on a display.

2. Method according to Claim 1, **characterized in that** the product manual is produced as a computer system data record and is adaptively added to/extended in the course of the production process.

3. Method according to Claim 1, **characterized in that** the product manual is created as a logbook for a motor vehicle.

4. Method according to Claim 1 or 2, **characterized in that** information which has only become apparent in the course of the fabrication process is recorded in the product manual.

5. Method according to one of the preceding claims, **characterized in that** technical data which is acquired by measurement on the entirely or partially completed product taking into account fabrication tolerances is recorded in the product manual.

6. Method according to one of the preceding claims, **characterized in that** performance data which is acquired experimentally during or after the fabrication of the product on a test bench is recorded in the product manual.

7. Method according to one of the preceding claims, **characterized in that** customer specifications are stated in the product manual.

8. Method according to one of the preceding claims, **characterized in that** the product manual is printed in a form which can be read by humans.

9. Method according to one of the preceding claims, **characterized in that** the content of the product manual is provided on an individually recorded CD-ROM.

10. Method according to one of the preceding claims, **characterized in that** the content of the product manual is stored on a data memory, such as a cassette, read-only memory, chip card or the like, which is associated with the product.

11. Method according to one of the preceding claims, **characterized in that** the content of the product manual which is embodied as a logbook for a motor vehicle is stored on a data memory which can be read out via a navigation system.

12. Method according to one of the preceding claims, **characterized in that** the product manual is composed in a predefinable language.

13. Method according to one of the preceding claims, **characterized in that** a product-specific or vehicle-specific functional and/or operator-control product manual can be transmitted for printing and/or display on a corresponding medium by means of the product data or vehicle data which is collected in this way.

14. Method according to Claim 13, **characterized in that** the medium a printer and/or a display on which the entire or only part of the content of the product manual can be represented.

15. Method according to one of the preceding claims, **characterized in that** the product manual is logically divided into a logistical part and a product-describing part.

16. Method according to Claim 15, **characterized in that** the access to the logistical part can be called with a different electronic access method or access authorization from the product-describing part.

17. Method according to Claim 16, **characterized in that** the product-describing part of the product manual or logbook can be extended with user-specific, product-specific or vehicle-specific use data or setting data.

18. Method according to one of the preceding claims, **characterized in that** the use data and/or setting data and/or product-describing data can be exported from the product or vehicle to data carriers, while the logistical data which relates to the fabrication process and relates to the identification of parts remains in or on the product/vehicle.

19. Method according to one of the preceding claims, **characterized in that** by way of logistical data and, if appropriate, fault data or damage reporting data about the product or about the vehicle, an electronically logical correlation regarding identification of parts, origin, supplier, installation date etc. of the defective part is made possible.

20. Method according to Claim 19, **characterized in that** this correlation is carried out inside the vehicle.

21. Method according to Claim 19, **characterized in that** this correlation is carried out outside the vehicle.

22. Method according to one of the preceding claims, **characterized in that** operator instruction images or operator instruction film sequences can be generated from the electronic logbook.

23. Data storage device for a product or logbook, in which product information or operational information is stored on a data memory (4) which is to be referred to as a product manual or logbook, it being possible to retrieve said information on a display unit or in a motor vehicle by means of an output unit or display unit (20), **characterized in that** a "logbook" operating mode can be represented as a menu-prompted operating manual on a display, and means are provided for producing the logbook according to one of the preceding claims.

24. Data storage device according to Claim 22,
**characterized in that** the data can be presented on a screen (21).

25. Data storage device according to one of Claims 23 or 24, **characterized in that** setting data such as seat settings, air-conditioning settings, radio transmitter settings, mirror settings, telephone numbers, navigation data can also be stored in this data memory (4).

26. Data storage device according to one of Claims 23 to 25, **characterized in that** at least one interface is provided for exporting and/or importing data.

## Revendications

1. Procédé de création de documents ou d'informations concernant un produit pouvant être fabriqué en série et à la chaîne, les caractéristiques techniques principales du produit étant enregistrées dans un manuel du produit et les renseignements importants en matière d'utilisation ou de maniement du produit étant consignés dans le manuel du produit, **caractérisé en ce que** le manuel du produit est généré directement durant le processus de production à la chaîne, **en ce qu'**en l'occurrence les particularités d'équipements individuels caractéristiques à chaque exemplaire du produit sont enregistrées dans le manuel du produit associé en particulier audit exemplaire du produit et conçu pour ledit exemplaire du produit et **en ce qu'**un mode d'emploi "manuel du produit" peut être représenté sur un écran d'affichage en tant que manuel de fonctionnement commandé par un menu.

2. Procédé selon la revendication 1, **caractérisé en ce que** le manuel du produit est créé en tant que bloc de données de traitement électronique et complété de façon adaptative au cours du processus de production.

3. Procédé selon la revendication 1, **caractérisé en ce que** le manuel du produit est créé en tant que manuel de bord destiné à un véhicule automobile.

4. Procédé selon la revendication 1 ou 2, **caractérisé en ce que** des informations connues seulement en cours de fabrication sont enregistrées dans le manuel du produit.

5. Procédé selon l'une quelconque des revendications précédentes, **caractérisé en ce que** les données techniques enregistrées dans le manuel du produit sont des données techniques déterminées par des mesures effectuées sur le produit entièrement ou partiellement fini, en tenant compte de tolérances de fabrication.

6. Procédé selon l'une quelconque des revendications précédentes, **caractérisé en ce que** des données de puissance déterminées expérimentalement sur un banc d'essai pendant ou après la fabrication du produit, sont enregistrées dans le manuel du produit.

7. Procédé selon l'une quelconque des revendications précédentes, **caractérisé en ce que** des spécifications du client sont consignées dans le manuel du produit.

8. Procédé selon l'une quelconque des revendications précédentes, **caractérisé en ce que** le manuel du produit est formulé dans une forme pouvant être lue par des êtres humains.

9. Procédé selon l'une quelconque des revendications précédentes, **caractérisé en ce que** le contenu du manuel du produit est consigné dans un CD-ROM gravé individuellement.

10. Procédé selon l'une quelconque des revendications précédentes, **caractérisé en ce que** le contenu du manuel du produit est mémorisé sur un support de mémoire de données correspondant au produit, comme par exemple une cassette, une mémoire morte, une carte à puce ou un autre support de nature similaire.

11. Procédé selon l'une quelconque des revendications précédentes, **caractérisé en ce que** le contenu du manuel du produit, lequel est conformé en tant que manuel de bord destiné à un véhicule automobile, est mémorisé sur un support de mémoire de données, lequel peut être lu par l'intermédiaire d'un système de navigation.

12. Procédé selon l'une quelconque des revendications précédentes, **caractérisé en ce que** le manuel du produit est rédigé dans une langue pouvant être définie à l'avance.

13. Procédé selon l'une quelconque des revendications précédentes, **caractérisé en ce que**, sur base des données du produit ou du véhicule ainsi collectées, un manuel de fonctionnement et/ou d'utilisation du produit spécifique au produit ou au véhicule peut être transféré sur un support correspondant en vue de l'impression ou de l'affichage de celui-ci.

14. Procédé selon la revendication 12, **caractérisé en ce que** le support est une imprimante ou un écran d'affichage, sur lequel ou laquelle l'intégralité ou une partie seulement du contenu du manuel du produit peut être reproduite.

15. Procédé selon l'une quelconque des revendications précédentes, **caractérisé en ce que** le manuel du produit est subdivisé de manière logique en une partie logistique et en une partie descriptive du produit.

16. Procédé selon la revendication 14, **caractérisé en ce que** l'accès à la partie logistique peut être appelé au moyen d'un type d'accès ou d'une autorisation d'accès électronique autre que l'accès à la partie descriptive du produit.

17. Procédé selon la revendication 15, **caractérisé en ce que** la partie descriptive du produit du manuel du produit ou du manuel de bord peut être complétée par des données d'utilisation ou de réglage spécifiques au produit ou au véhicule, propres à l'utilisateur.

18. Procédé selon l'une quelconque des revendications précédentes, **caractérisé en ce que** les données d'utilisation et/ou de réglage et/ou les données descriptives du produit peuvent être exportées du produit ou du véhicule sur un support de données, tandis que les données logistiques concernant le processus de fabrication et l'identification des pièces restent avec le produit ou dans le véhicule.

19. Procédé selon l'une quelconque des revendications précédentes, **caractérisé en ce que** des données logistiques, ainsi que le cas échéant des données de signalement de défauts ou de défaillances du produit ou du véhicule permettent une corrélation logique électronique par l'intermédiaire de l'identification, de la provenance, du fournisseur, du jour de montage, etc. de la pièce défectueuse.

20. Procédé selon la revendication 18, **caractérisé en ce que** ladite corrélation est réalisée de façon interne au véhicule.

21. Procédé selon la revendication 18, **caractérisé en ce que** ladite corrélation est réalisée de façon externe au véhicule.

22. Procédé selon l'une quelconque des revendications précédentes, **caractérisé en ce que** des illustrations de mode d'emploi ou des séquences de film peuvent être générées à partir du manuel de bord électronique.

23. Dispositif de mémorisation de données concernant un produit ou un manuel de bord, par lequel des informations relatives au produit ou des informations de bord sont mémorisées sur un support de mémoire de données (4) désigné en tant que manuel du produit ou manuel de bord, lesquelles peuvent être appelées sur une unité d'affichage ou dans un véhicule automobile par l'intermédiaire d'une unité de sortie et d'affichage (20), **caractérisé en ce qu'**un mode d'emploi "manuel de bord" peut être représenté sur un écran d'affichage en tant que manuel de fonctionnement guidé par un menu et **en ce qu'**il est prévu des moyens de générer le manuel de bord selon l'une quelconque des revendications précédentes.

24. Dispositif de mémorisation de données selon la revendication 22, **caractérisé en ce que** les données peuvent être représentées sur un écran (21).

25. Dispositif de mémorisation de données selon l'une quelconque des revendications 22 ou 23, **caractérisé en ce que** des données de réglage, comme par exemple des réglages des sièges, des réglages de la climatisation, des réglages des émetteurs radio, des réglages des rétroviseurs, des numéros de téléphone, des données de navigation, peuvent également être entrées dans ce support de mémoire de données (4).

26. Dispositif de mémorisation de données selon l'une quelconque des revendications 22 à 24, **caractérisé en ce qu'**au moins une interface est prévue pour exporter et/ou importer des données.
